# EUROPÄISCHE PATENTSCHRIFT

(11) **EP 1 754 018 B1**
(45) Veröffentlichungstag und Bekanntmachung des Hinweises auf die Patenterteilung: **11.07.2018**
(21) Anmeldenummer: 05753788.8
(22) Anmeldetag: 17.05.2005
(51) Int. Cl.: G01B 11/30

(54) **VORRICHTUNG UND VERFAHREN ZUM PRÜFEN VON OBERFLÄCHEN IM INNEREN VON LÖCHERN**
DEVICE AND METHOD FOR INSPECTING THE INTERNAL SURFACES OF HOLES
DISPOSITIF ET PROCEDE DE VERIFICATION DE SURFACES SITUEES A L'INTERIEUR DE TROUS

(30) Priorität: 08.06.2004 DE 102004027758
(43) Veröffentlichungstag der Anmeldung: 21.02.2007
(73) Patentinhaber: Micro-Epsilon Messtechnik GmbH & Co. KG, 94496 Ortenburg (DE)
(72) Erfinder: MESSERSCHMIDT, Bernhard, 07749 Jena (DE); WISSPEINTNER, Karl, 94496 Ortenburg (DE)
(74) Vertreter: Patent- und Rechtsanwälte Ullrich & Naumann
(86) Internationale Anmeldenummer: PCT/DE2005/000914
(87) Internationale Veröffentlichungsnummer: WO 2005/121700

(56) Entgegenhaltungen:
- WO-A1-2005/085750
- WO-A2-02/38040
- DE-A1- 10 242 374
- DE-A1-102004 011 189
- US-A- 3 761 186
- US-A- 4 585 349
- US-A- 5 785 651
- US-B1- 6 462 815
- HASMAN E ET AL: "COLOR-CODED OPTICAL PROFILOMETRY WITH >106 RESOLVED DEPTH STEPS" APPLIED OPTICS, OPTICAL SOCIETY OF AMERICA,WASHINGTON, US, Bd. 40, Nr. 10, 1. April 2001 (2001-04-01), Seiten 1609-1616, XP001065994 ISSN: 0003-6935

## Beschreibung

Die Erfindung betrifft eine Vorrichtung zum Prüfen von Oberflächen im Inneren von Löchern, Vertiefungen, oder dergleichen, wobei die Vorrichtung eine Lichtquelle zum Erzeugen eines Lichtstrahls aufweist, wobei der Lichtstrahl durch eine Abbildungsoptik fokussierbar ist, wobei der fokussierte Lichtstrahl mittels einer nach der Abbildungsoptik angeordneten Umlenkvorrichtung auf die Oberfläche lenkbar ist und wobei zum Detektieren des reflektierten Lichtstrahls eine Sensorvorrichtung vorgesehen ist.

Oberflächenprüfungen im Innern von Löchern, Vertiefungen oder dergleichen, insbesondere von Bohrlöchern oder kleinen Spalten, mit Abmessungen im Millimeterbereich stellen eine wichtige Aufgabe in vielen Bereichen der Technik dar. Qualitativ hochwertige und passgenaue Bohrungen werden häufig dann benötigt, wenn diese zur Aufnahme von beweglichen Teilen wie Stiften, Zylindern oder kleinen Kolben beispielsweise in Druckventilen vorgesehen sind. Druckventile werden in der Pneumatik aber auch in weiteren Bereichen wie in der Automobiltechnik bei Brennstoffeinspritzungen verwendet. Dort finden inzwischen Teststifte für elektrische Schaltungen mit Pneumatikzylindern mit 2 mm Durchmesser Anwendung. Diese sehr kleinen Zylinder sind notwendig, um den immer kleineren elektrischen Schaltungen gerecht zu werden. Auch für Schrumpfverbindungen werden passgenaue Bohrungen verlangt, die nicht durch Grate oder Lunker beschädigt sein dürfen. Darüber hinaus kann es auch in Löchern außerhalb des Millimeterbereichs von Bedeutung sein, die Oberflächenbeschaffenheit genau zu kennen. So müssen beispielsweise Bremszylinder bei einem Kraftfahrzeug eine besonders hochwertige Oberfläche aufweisen, da kleine Späne oder Grate in den Zylindern bereits nach kurzer Zeit zur Zerstörung der Teile führen können.

Zur Oberflächenprüfung werden derzeit im Wesentlichen zwei Verfahren in der Praxis eingesetzt. Bei einem System bildet ein Glaskegel eine Optik, mit der nahezu 360° der umgebenden Oberfläche auf einen Lichtwellenleiterbündel abgebildet werden kann. Das Lichtwellenleiterbündel besteht häufig aus einigen tausend einzelnen Fasern, die gemeinsam ein Bild an eine Kamera weiterleiten. Durch eine geeignete Bildverarbeitung lassen sich dadurch Strukturen auf der Oberfläche erkennen. Ihre tatsächliche Größe, insbesondere ihre dreidimensionale Ausdehnung lässt sich damit jedoch nicht bestimmen.

Bei einer anderen in der Praxis gebräuchlichen Technik wird ein monochromatischer Lichtstrahl auf die zu untersuchende Oberfläche gelenkt, wobei dieser Lichtstrahl immer auf die Oberfläche fokussiert gehalten wird. Ändert sich der Abstand zwischen der Optik und dem beleuchteten Bildpunkt infolge von Unebenheiten der Oberfläche und ist damit der Lichtstrahl nicht mehr fokussiert, so regelt eine automatische Fokussierungsschaltung die Optik derart nach, dass der Lichtstrahl wieder auf die Oberfläche fokussiert ist. Über diese Nachregelung der Optik kann die Abstandsänderung erfasst werden. Auf diese Weise lässt sich die Oberfläche zwar dreidimensional vermessen, durch das notwendige Nachführen der Fokussierung lassen sich jedoch nur relativ langsame Messgeschwindigkeiten erreichen. Eine Prüfung in einem laufenden Produktionsprozess ist damit nicht realisierbar.

Aus der US 5,785,651 ist ein Abstandssensor bekannt, der longitudinale chromatische Aberration zur Abstandsmessung nutzt. Hierzu wird ein Mehrfarbenlichtstrahl auf eine Optik bestehend aus einer Linse und einer Fresnel-Zonenplatte gelenkt, wodurch ein auf mehrere Brennpunkte fokussierter Beleuchtungslichtstrahl entsteht. Dieser Beleuchtungslichtstrahl wird auf die Oberfläche eines zu vermessenden Objekts (hier die Oberfläche eines Augapfels) gelenkt. Aus den an der Oberfläche reflektierten spektralen Anteilen wird auf die Entfernung des beleuchteten Oberflächenpunkts von dem Sensor geschlossen.

Die nachveröffentlichte DE 10 2004 011 189 A1 offenbart einen optischen Messkopf. Mittels einer GRIN(gradient index)-Linse wird gezielt chromatische Aberration herbeigeführt, die zur Messung eines Abstandes innerhalb eines zylindrischen Bohrung verwendet werden kann.

Andere Sensoren zur Vermessung von Bohrlöchern sind in der US 6,462,815 B1 und der US 3,761,186 A offenbart.

Der vorliegenden Erfindung liegt daher die Aufgabe zugrunde, eine Vorrichtung der eingangs genannten Art derart auszugestalten und weiterzubilden, dass eine möglichst schnelle, einfache und reproduzierbare Überprüfung von Oberflächen im Inneren von Löchern, Vertiefungen oder dergleichen mit Abmessung bis in den Millimeterbereich bei einfachster Konstruktion möglich ist. Desweiteren soll ein entsprechendes Verfahren angegeben werden.

Erfindungsgemäß wird die voranstehende Aufgabe durch die Merkmale des Patentanspruches 1 gelöst. Danach ist die in Rede stehende Vorrichtung derart ausgestaltet, dass mit der Lichtquelle ein Mehrfarbenlichtstrahl erzeugbar ist, der durch chromatische Aberration der Abbildungsoptik auf mehrere unterschiedlich weit von der Abbildungsoptik beabstandete Punkte fokussiert ist, dass aus dem Spektrum des detektierten Lichtstrahls der Abstand zu der Oberfläche ermittelbar ist und dass die Abbildungsoptik eine GRIN(gradient index)-Linse aufweist.

In verfahrensmäßiger Hinsicht ist die voranstehende Aufgabe durch die Merkmale der Patentanspruchs 11 gelöst. Hiernach ist das in Rede stehende Verfahren dadurch gekennzeichnet, dass mit der Lichtquelle ein Mehrfarbenlichtstrahl erzeugt wird, der durch chromatische Aberration einer GRIN(gradient index)-Linse der Abbildungsoptik auf mehrere unterschiedlich weit von der Abbildungsoptik beabstandete Punkte fokussiert wird, und dass aus dem Spektrum des detektierten Lichtstrahls der Abstand zu der Oberfläche ermittelt wird.

In erfindungsgemäßer Weise ist zunächst erkannt worden, dass auf die Nachfokussierung der Optik verzichtet werden kann. In Abkehr von den aus der Praxis bekannten Verfahren wird gezielt Mehrfarbenlicht eingesetzt und die dadurch entstehende, häufig unerwünschte chromatische Aberration bei Mehrfarbenlicht in Optiken ausgenutzt. Durch die chromatische Aberration werden Lichtstrahlen unterschiedlicher Wellenlänge auf unterschiedliche Brennpunkte fokussiert. Diese Brennpunkte liegen je nach Ausmaß der chromatischen Aberration in einem mehr oder weniger stark ausgedehnten Bereich und mehr oder weniger weit von der Abbildungsoptik beabstandet auf der optischen Achse der Abbildungsoptik. Da von der bestrahlten Oberfläche die spektralen Anteile am besten reflektiert werden, die im Wesentlichen auf den beleuchteten Punkt der Oberfläche fokussiert sind, kann erfindungsgemäß aus einer spektralen Analyse des reflektierten Lichtstrahls auf den Abstand zwischen der Optik und dem beleuchteten Bildpunkt geschlossen werden. Wird ein ganzer Bereich auf der Oberfläche durch Lenken des fokussierten Lichtstrahls abgetastet, so kann auf diese Weise ein Profil über die Beschaffenheit der Oberfläche erstellt werden.

Die erfindungsgemäße Vorrichtung und das erfindungsgemäßen Verfahren lassen sich in vorteilhafter Weise überall dort einsetzen, wo Oberflächen in räumlich sehr beschränkten Umgebungen vermessen werden müssen. So können beispielsweise Bohrlöcher, aber auch Mulden, Spalten oder anderen Vertiefungen vermessen werden.

Erfindungsgemäß wird dazu ein Mehrfarbenlichtstrahl erzeugt der vorzugsweise über einen oder mehrere Lichtwellenleiter einer Abbildungsoptik zugeleitet wird. Dabei handelt es sich vorzugsweise um Weißlicht, da sich dadurch bei der Auswertung der spektralen Anteile besonders einfache Umstände ergeben. Die Abbildungsoptik besteht in vorteilhafter Weise aus einer Linse oder einem Linsensystem.

Hinsichtlich einer möglichst einfachen Miniaturisierung und einer möglichst preisgünstigen Abbildungsoptik weist diese eine GRIN(gradient index)-Linse auf. GRIN-Linsen bestehen meist aus zylinderförmigen Blöcken, die durch spezielle Produktionsprozesse mit einer kontinuierlichen radialen Brechzahländerung versehen sind. Dabei werden dieselben Effekte auf einen die Linse durchquerenden Lichtstrahl erzielt wie mit konventionellen Linsen. Allerdings lassen sich GRIN-Linsen bei niedrigeren Produktionskosten wesentlich stärker miniaturisieren, was insbesondere in räumlich beschränkten Umgebungen von großem Vorteil ist.

In besonders vorteilhafter Weise kann der GRIN-Linse eine Stellvorrichtung, ein sogenannter Spacer, zugeordnet sein, mit der die Aberration der Linse angepasst werden kann. Damit lässt sich eine derartige Linse besonders einfach auf geänderte Systemkonfigurationen anpassen.

Bei Messsituationen, bei denen zwischen der Optik und dem Messobjekt größere Abstände überwunden werden müssen, lässt sich der GRIN-Linse eine weitere Optik nachschalten. Hier könnte beispielsweise eine bei Asphärenteleskopen benannte Abbildungsoptik eingesetzt werden. In vorteilhafter Weise lässt sich zur Lichtlenkung in den Strahlengang beispielsweise zwischen den Linsen der Teleskopoptik ein Lichtwellenleiter einkoppeln, wodurch noch größere Reichweiten möglich sind.

Hinsichtlich einer besonders einfachen Lenkbarkeit des fokussierten Lichtstrahls könnte eine Umlenkvorrichtung vorgesehen sein, die vorzugsweise bewegbar ausgestaltet ist. Dabei können Prismen, Spiegel oder auch planparallele Platten zum Einsatz kommen. Vorteilhafterweise wird die Umlenkvorrichtung zum Erreichen von reproduzierbaren Messabläufen durch elektrische, piezoelektrische, magnetische oder vergleichbare Stellglieder beeinflusst, die vorzugsweise durch eine elektronische Schaltung, beispielsweise ein Mikrocontroller, angesteuert werden. Durch geeignete Steuerung der Umlenkvorrichtung lässt sich die gesamte Oberfläche oder zumindest einen zu prüfenden Teil der Oberfläche im Innern eines Loches beleuchten und vermessen. Dabei kann der Lichtstrahl linear, kreis-, spiral-, meanderförmig oder in anderer geeigneter Weise über die Oberfläche geführt werden.

Hinsichtlich einer besonders einfachen und Platz sparenden Ausgestaltung der Vorrichtung könnte der reflektierte Lichtstrahl denselben Weg wie der durch die Lichtquelle erzeugten Lichtstrahl nehmen, lediglich in umgekehrter Richtung. An geeigneter Stelle könnte der reflektierte Lichtstrahl durch eine optische Weiche herausgetrennt und einer Sensorvorrichtung zugeführt werden.

Die Sensorvorrichtung besteht vorteilhafterweise aus einem elektronischen Bauteil, das in der Lage ist, Mehrfarbenlicht in Abhängigkeit von dem Spektrum des eingefallenen Lichtstrahls in geeignete elektrische Signale umzusetzen. Vorzugsweise kommt hier ein CCD-Chip oder andere Photodetektor-Arrays zum Einsatz.

Die erfindungsgemäße Vorrichtung lässt sich auf relativ einfache Weise als Mehrkanalsystem betreiben, wodurch mehrere Messungen gleichzeitig durchführbar sind. Dabei lässt sich das aus der Abbildungsoptik heraustretende Licht in mehrere Messpunkte aufteilen und die jeweilige Reflektion der Messpunkte über vorzugsweise mehrere Lichtwellenleiter der Sensorvorrichtung zuleiten. In besonders vorteilhafter Weise sind dabei die Messpunkte je nach Messsituation angeordnet. Hierbei wäre beispielsweise eine zeilenförmige oder kreisförmige Anordnung denkbar.

Hinsichtlich einer besonders vielseitigen Auswertemöglichkeit der durch die Sensorvorrichtung gewonnenen Signale könnten diese einer elektronischen Vorrichtung zugeführt werden, die beispielsweise aus einem Digitalrechner in Form eines Mikrocontrollers oder eines digitalen Signalprozessors besteht. Damit lässt sich eine Signalverarbeitung durchführen und die gewonnenen Daten in geeigneter Weise für die spätere Verwendung beispielsweise eine Visualisierung aufbereiten. Eventuell könnte hier auch eine Bewertung der Messergebnisse erfolgen und die Oberfläche nach gewissen Kriterien klassifiziert werden.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 11 nachgeordneten Patentansprüche und andererseits auf die nachfolgende Erläuterung von bevorzugten Ausführungsbeispielen der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht einen prinzipiellen Aufbau einer erfindungsgemäßen Vorrichtung,
- Fig. 2: in einer schematischen Ansicht den Einsatz einer GRIN-Linse in Verbindung mit einem Linsensystem und
- Fig. 3: in einer schematischen Ansicht eine Umlenkvorrichtung mit einer planparallelen Platte.

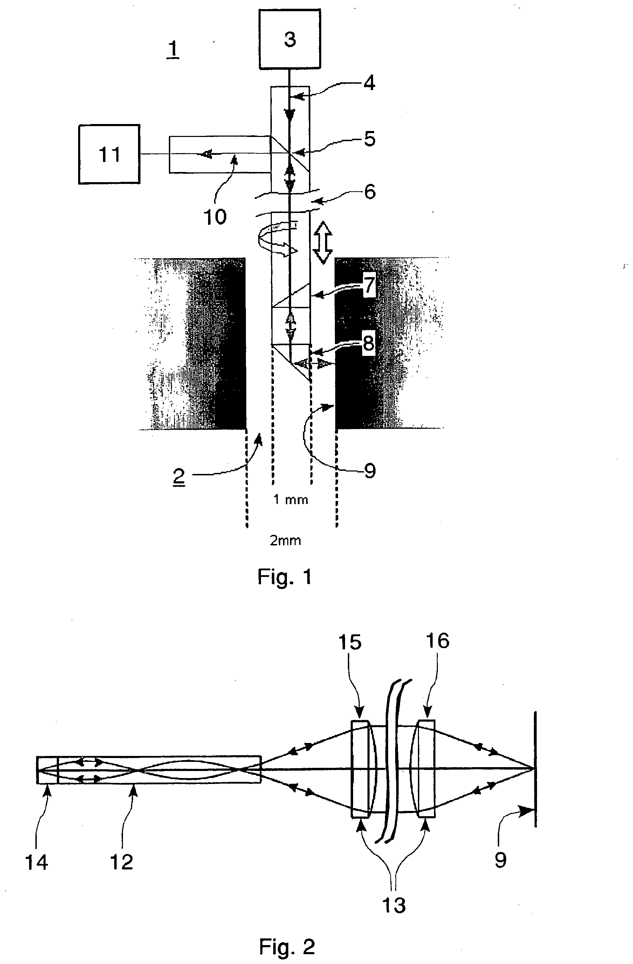

Fig. 1 zeigt in einer schematischen Darstellung einen prinzipiellen Aufbau einer erfindungsgemäßen Vorrichtung 1 zum Prüfen der Oberfläche 9 im Inneren eines Loches 2. Die Vorrichtung 1 besteht aus einer Lichtquelle 3 mit Hilfe derer ein Mehrfarbenlichtstrahl 4 erzeugbar ist. Dieser Lichtstrahl 4 passiert unbeeinflusst eine optische Weiche 5 und wird in einen Lichtwellenleiter 6 zum Lenken des Lichtstrahls 4 eingekoppelt. Mit einem Linsensystem 7 wird der Lichtstrahl 4 unter Ausnutzung der chromatischen Aberration auf eine Reihe von Brennpunkten fokussiert und mit einem Umlenkkeil 8 auf die Oberfläche 9 des Loches 2 gelenkt. Das Linsensystem 7 und der Umlenkkeil 8 sind derart auf einander abgestimmt, dass mindestens einer der Brennpunkte auf der Oberfläche 9 liegt. Unter Umständen muss eine entsprechende, hier nicht eingezeichnete Anpassvorrichtung vorgesehen sein, damit diese Forderung erfüllt werden kann. Die aus Linsensystem 7 und Umlenkkeil 8 bestehende Optik ist drehbar gelagert und kann längs des Loches 2 bewegt werden. Diese Bewegungen werden vorzugsweise über eine hier nicht eingezeichnete elektrische Stellvorrichtung durchgeführt, so dass die Oberfläche 9 des Loches 2 möglichst vollständig und reproduzierbar abgetastet werden kann.

An der Oberfläche 9 wird der Lichtstrahl reflektiert und über den Umlenkkeil 8 und das Linsensystem 7 dem Lichtwellenleiter 6 zugeführt. Die optische Weiche trennt den von der Lichtquelle 3 erzeugten Lichtstahl 4 von dem reflektierten Lichtstrahl 10, der der Sensorvorrichtung 11 zugeführt wird. Diese Sensorvorrichtung ist mit einer ebenfalls nicht eingezeichneten Auswerteelektronik gekoppelt, die aus dem Spektrum des reflektierten Lichtstrahls 10 den Abstand zwischen der erfindungsgemäßen Vorrichtung 1 und der Oberfläche 9 berechnet und die Daten für eine spätere Auswertung und/oder Visualisierung zur Verfügung stellt.

In Fig. 2 ist in einer schematischen Ansicht die Verwendung einer GRIN-Linse 12 mit einer konventionellen Optik 13 dargestellt. In der Zeichnung ist eine etwa 1,0 Pitch-GRIN-Linse 12 abgebildet, d.h. die Linse ist derart dimensioniert, dass ein einfallender Lichtstrahl eine Periode einer Sinus-Schwingung im Inneren der GRIN-Linse 12 beschreibt. Zur Beeinflussung der chromatischen Aberration ist der GRIN-Linse 12 eine Stellvorrichtung 14, ein sogenannter Spacer, vorgeschaltet.

Der aus der GRIN-Linse 12 austretende Lichtstrahl wird durch eine Optik 13, die vorzugsweise durch eine bei Asphärenteleskopen bekannte 1:1 Abbildungsoptik mit zwei asphärischen Linsen gebildet ist, zugeführt. Zwischen den beiden Linsen 15 und 16 kann zur Überbrückung von noch größeren Distanzen ein hier nicht eingezeichneter Lichtwellenleiter angeordnet sein. Der aus dieser Optik austretende Lichtstrahl wird der Oberfläche 9 unter Umständen unter Verwendung einer Umlenkvorrichtung 8 zugeführt.

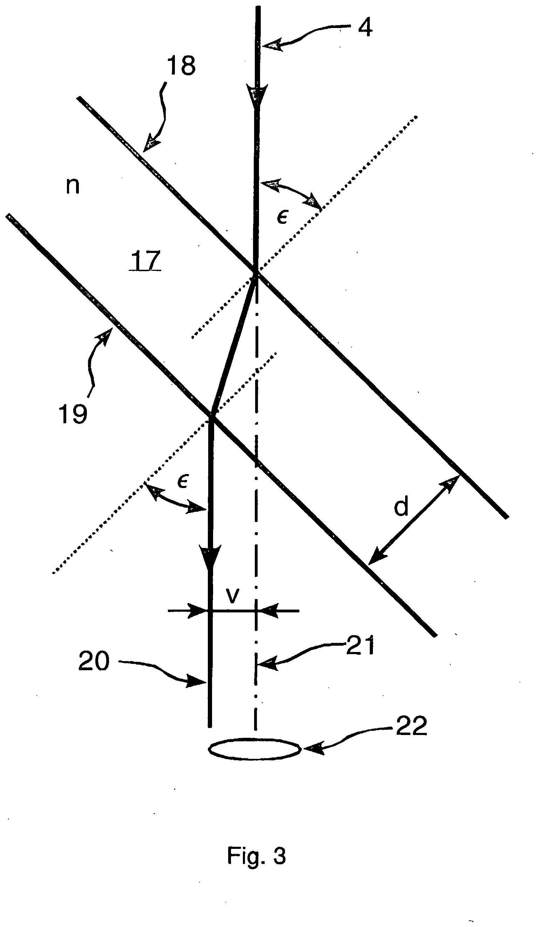

Fig. 3 zeigt eine Ausgestaltung der Umlenkvorrichtung 8 durch eine planparallele Platte 17. Der einfallende Lichtstrahl 4 wird an den beiden Grenzflächen 18 und 19 jeweils gebrochen, wodurch ein parallel verschobener Lichtstrahl 20 entsteht. Die Verschiebung v ergibt sich aus der Dicke d der Platte 17, dem Winkel ε zwischen dem einfallenden Lichtstrahl 4 und dem Lot zu der Platte 17 und dem Brechungsindex n. Wird die planparallele Platte 17 um die Achse 21 rotiert, so beschreibt der parallel verschobene Lichtstrahl 20 eine Kreisbahn auf der zu untersuchenden Oberfläche. Wird zusätzlich die Neigung der planparallelen Platte 17 beeinflusst, können Oberflächen ringförmig abgetastet werden.

Schließlich sei angemerkt, dass die voranstehend erörterten Ausführungsbeispiele die beanspruchte Lehre lediglich erläutern, diese jedoch nicht auf die Ausführungsbeispiele einschränken.

## Patentansprüche (Patentansprüche für folgende(n) Vertragsstaat(en): FR, GB, IT)

1. Vorrichtung zum Prüfen von Oberflächen im Inneren von Löchern oder Vertiefungen, wobei die Vorrichtung (1) eine Lichtquelle (3) zum Erzeugen eines Lichtstrahls (4) aufweist, wobei der Lichtstrahl (4) durch eine Abbildungsoptik (7) fokussierbar ist, wobei der fokussierte Lichtstrahl mittels einer nach der Abbildungsoptik (7) angeordneten Umlenkvorrichtung (8) auf die Oberfläche (9) lenkbar ist und wobei zum Detektieren des von der Oberfläche (9) reflektierten Lichtstrahls (10) eine Sensorvorrichtung (11) vorgesehen ist, wobei
mit der Lichtquelle (3) ein Mehrfarbenlichtstrahl (4) erzeugbar ist, der durch chromatische Aberration der Abbildungsoptik (7) auf mehrere unterschiedlich weit von der Abbildungsoptik (7) beabstandete Punkte fokussiert ist, wobei aus dem Spektrum des detektierten Lichtstrahls (10) der Abstand zu der Oberfläche ermittelbar ist und wobei die Abbildungsoptik (7) eine GRIN(gradient index)-Linse (12) aufweist.

2. Vorrichtung nach Anspruch 1, **dadurch gekennzeichnet, dass** der durch die Lichtquelle (3) erzeugte Mehrfarbenlichtstrahl (4) ein polychromatischer Lichtstrahl, vorzugsweise Weißlicht ist und/oder
dass der Lichtstrahl (4) von der Lichtquelle (3) durch einen oder mehrere Lichtwellenleiter (6) zu der Abbildungsoptik (7) geleitet wird.

3. Vorrichtung nach Anspruch 1 oder 2, **dadurch gekennzeichnet, dass** die Abbildungsoptik (7) ein Linsensystem aufweist.

4. Vorrichtung nach einem der Ansprüche 1 bis 3, **dadurch gekennzeichnet, dass** die GRIN-Linse (12) durch eine Stellvorrichtung (14) in deren chromatischen Aberration anpassbar ist und/oder dass
der GRIN-Linse (12) eine weitere Optik (13) nachgeschaltet ist, mit Hilfe derer bei Messungen ein größerer Abstand zwischen der GRIN-Linse (12) und der zu vermessenden Oberfläche (9) erreichbar und/oder eine Einkopplung der aus der GRIN-Linse (12) austretenden Lichtstrahlen in einen Lichtwellenleiter möglich ist.

5. Vorrichtung nach einem der Ansprüche 1 bis 4, **dadurch gekennzeichnet, dass** die Umlenkvorrichtung (8) bewegbar ausgestaltet ist, wobei
die Umlenkvorrichtung (8) durch elektrische, piezoelektrische, magnetische oder vergleichbare Stellvorrichtungen bewegbar sein kann und wobei
die Umlenkvorrichtung (8) ein Prisma, eine planparallele Platte, ein Spiegel oder andere die Ausbreitungsrichtung von Lichtstrahlen beeinflussenden Vorrichtungen aufweisen kann.

6. Vorrichtung nach einem der Ansprüche 1 bis 5, **dadurch gekennzeichnet, dass** der durch die Lichtquelle (3) erzeugte Lichtstrahl (4) und der an der Oberfläche (9) reflektierte Lichtstrahl (10) durch eine optische Weiche (4) getrennt werden.

7. Vorrichtung nach einem der Ansprüche 1 bis 6, **dadurch gekennzeichnet, dass** die Sensorvorrichtung (11) ein Photodetektor-Array, vorzugsweise ein lineares Array umfasst.

8. Vorrichtung nach einem der Ansprüche 1 bis 7, **dadurch gekennzeichnet, dass** die Vorrichtung als Mehrkanalsystem aufgebaut ist, wodurch mehrere Messungen gleichzeitig durchführbar sind.

9. Vorrichtung nach einem der Ansprüche 1 bis 8, **dadurch gekennzeichnet, dass** der aus der Abbildungsoptik (7) heraustretende Lichtstrahl auf mehrere Messpunkte aufteilbar ist und die Reflexion der Messpunkte über mehrere Lichtwellenleiter (6) zu der Sensorvorrichtung (11) leitbar sind.

10. Vorrichtung nach einem der Ansprüche 1 bis 9, **dadurch gekennzeichnet, dass** die durch die Sensorvorrichtung (11) erzeugten Signale einer elektronischen Vorrichtung, vorzugsweise einem Digitalrechner in Form eines Mikrocontrollers oder eines digitalen Signalprozessors, zur Signalverarbeitung zugeführt werden.

11. Verfahren zum Prüfen von Oberflächen im Inneren von Löchern oder Vertiefungen zum Betreiben einer Vorrichtung nach einem der Ansprüche 1 bis 10, wobei die Vorrichtung (1) eine Lichtquelle (3) zum Erzeugen eines Lichtstrahls (4) aufweist, wobei der Lichtstrahl (4) durch eine Abbildungsoptik (7) fokussierbar ist, wobei der fokussierte Lichtstrahl mittels einer nach der Abbildungsoptik (7) angeordneten Umlenkvorrichtung (8) auf die Oberfläche (9) lenkbar ist und wobei zum Detektieren des reflektierten Lichtstrahls (10) eine Sensorvorrichtung (11) vorgesehen ist, wobei
mit der Lichtquelle (3) ein Mehrfarbenlichtstrahl (4) erzeugt wird, der durch chromatische Aberration einer GRIN(gradient index)-Linse (12) der Abbildungsoptik (7) auf mehrere unterschiedlich weit von der Abbildungsoptik beabstandete Punkte fokussiert wird, und wobei aus dem Spektrum des detektierten Lichtstrahls (10) der Abstand zu der Oberfläche ermittelt wird.

12. Verfahren nach Anspruch 11, **dadurch gekennzeichnet, dass** der Lichtstrahl (4) durch die Umlenkvorrichtung (8) linear, kreis-, spiral-, meanderförmig oder in anderer geeigneter Art über die Oberfläche (9) geführt wird und somit die Oberfläche (9) abgerastert wird.

## Patentansprüche (Patentansprüche für folgende(n) Vertragsstaat(en): DE)

1. Vorrichtung zum Prüfen von Oberflächen im Inneren von Löchern oder Vertiefungen, wobei die Vorrichtung (1) eine Lichtquelle (3) zum Erzeugen eines Lichtstrahls (4) aufweist, wobei der Lichtstrahl (4) durch eine Abbildungsoptik (7) fokussierbar ist, wobei der fokussierte Lichtstrahl mittels einer nach der Abbildungsoptik (7) angeordneten Umlenkvorrichtung (8) auf die Oberfläche (9) lenkbar ist und wobei zum Detektieren des von der Oberfläche (9) reflektierten Lichtstrahls (10) eine Sensorvorrichtung (11) vorgesehen ist, wobei
mit der Lichtquelle (3) ein Mehrfarbenlichtstrahl (4) erzeugbar ist, der durch chromatische Aberration der Abbildungsoptik (7) auf mehrere unterschiedlich weit von der Abbildungsoptik (7) beabstandete Punkte fokussiert ist, wobei aus dem Spektrum des detektierten Lichtstrahls (10) Abstand zu der Oberfläche ermittelbar ist, wobei die Abbildungsoptik (7) eine GRIN(gradient index)-Linse (12) aufweist und wobei die GRIN-Linse (12) durch eine Stellvorrichtung (14) in deren chromatischen Aberration anpassbar ist.

2. Vorrichtung nach Anspruch 1, **dadurch gekennzeichnet, dass** der durch die Lichtquelle (3) erzeugte Mehrfarbenlichtstrahl (4) ein polychromatischer Lichtstrahl, vorzugsweise Weißlicht ist und/oder
dass der Lichtstrahl (4) von der Lichtquelle (3) durch einen oder mehrere Lichtwellenleiter (6) zu der Abbildungsoptik (7) geleitet wird.

3. Vorrichtung nach Anspruch 1 oder 2, **dadurch gekennzeichnet, dass** die Abbildungsoptik (7) ein Linsensystem aufweist.

4. Vorrichtung nach einem der Ansprüche 1 bis 3, **dadurch gekennzeichnet, dass** der GRIN-Linse (12) eine weitere Optik (13) nachgeschaltet ist, mit Hilfe derer bei Messungen ein größerer Abstand zwischen der GRIN-Linse (12) und der zu vermessenden Oberfläche (9) erreichbar und/oder eine Einkopplung der aus der GRIN-Linse (12) austretenden Lichtstrahlen in einen Lichtwellenleiter möglich ist.

5. Vorrichtung nach einem der Ansprüche 1 bis 4, **dadurch gekennzeichnet, dass** die Umlenkvorrichtung (8) bewegbar ausgestaltet ist, wobei
die Umlenkvorrichtung (8) durch elektrische, piezoelektrische, magnetische oder vergleichbare Stellvorrichtungen bewegbar sein kann und wobei
die Umlenkvorrichtung (8) ein Prisma, eine planparallele Platte, ein Spiegel oder andere die Ausbreitungsrichtung von Lichtstrahlen beeinflussenden Vorrichtungen aufweisen kann.

6. Vorrichtung nach einem der Ansprüche 1 bis 5, **dadurch gekennzeichnet, dass** der durch die Lichtquelle (3) erzeugte Lichtstrahl (4) und der an der Oberfläche (9) reflektierte Lichtstrahl (10) durch eine optische Weiche (4) getrennt werden.

7. Vorrichtung nach einem der Ansprüche 1 bis 6, **dadurch gekennzeichnet, dass** die Sensorvorrichtung (11) ein Photodetektor-Array, vorzugsweise ein lineares Array umfasst.

8. Vorrichtung nach einem der Ansprüche 1 bis 7, **dadurch gekennzeichnet, dass** die Vorrichtung als Mehrkanalsystem aufgebaut ist, wodurch mehrere Messungen gleichzeitig durchführbar sind.

9. Vorrichtung nach einem der Ansprüche 1 bis 8, **dadurch gekennzeichnet, dass** der aus der Abbildungsoptik (7) heraustretende Lichtstrahl auf mehrere Messpunkte aufteilbar ist und die Reflexion der Messpunkte über mehrere Lichtwellenleiter (6) zu der Sensorvorrichtung (11) leitbar sind.

10. Vorrichtung nach einem der Ansprüche 1 bis 9, **dadurch gekennzeichnet, dass** die durch die Sensorvorrichtung (11) erzeugten Signale einer elektronischen Vorrichtung, vorzugsweise einem Digitalrechner in Form eines Mikrocontrollers oder eines digitalen Signalprozessors, zur Signalverarbeitung zugeführt werden.

11. Verfahren zum Prüfen von Oberflächen im Inneren von Löchern oder Vertiefungen zum Betreiben einer Vorrichtung nach einem der Ansprüche 1 bis 10, wobei die Vorrichtung (1) eine Lichtquelle (3) zum Erzeugen eines Lichtstrahls (4) aufweist, wobei der Lichtstrahl (4) durch eine Abbildungsoptik (7) fokussierbar ist, wobei der fokussierte Lichtstrahl mittels einer nach der Abbildungsoptik (7) angeordneten Umlenkvorrichtung (8) auf die Oberfläche (9) lenkbar ist und wobei zum Detektieren des reflektierten Lichtstrahls (10) eine Sensorvorrichtung (11) vorgesehen ist, wobei
mit der Lichtquelle (3) ein Mehrfarbenlichtstrahl (4) erzeugt wird, der durch chromatische Aberration einer GRIN(gradient index)-Linse (12) der Abbildungsoptik (7) auf mehrere unterschiedlich weit von der Abbildungsoptik beabstandete Punkte fokussiert wird, wobei der GRIN-Linse (12) eine Stellvorrichtung zur Anpassung der chromatischen Aberration zugeordnet ist, und wobei aus dem Spektrum des detektierten Lichtstrahls (10) der Abstand zu der Oberfläche ermittelt wird.

12. Verfahren nach Anspruch 11, **dadurch gekennzeichnet, dass** der Lichtstrahl (4) durch die Umlenkvorrichtung (8) linear, kreis-, spiral-, meanderförmig oder in anderer geeigneter Art über die Oberfläche (9) geführt wird und somit die Oberfläche (9) abgerastert wird.

## Claims (Claims for the following Contracting State(s): FR, GB, IT)

1. Device for examining surfaces inside holes or recesses, wherein the device (1) has a light source (3) for producing a light beam (4), wherein the light beam (4) can be focused by means of an optical imaging system (7), wherein the focused light beam can be directed by means of a redirection device (8) which is arranged downstream of the optical imaging system (7) onto the surface (9), and wherein in order to detect the light beam (10) reflected by the surface (9) a sensor device (11) is provided, wherein
there can be produced by means of the light source (3) a multi-coloured light beam (4), which is focused by means of chromatic aberration of the optical imaging system (7) onto a plurality of locations which are spaced apart by different distances from the optical imaging system (7), wherein the spacing with respect to the surface can be established from the spectrum of the detected light beam (10), and wherein the optical imaging system (7) has a GRIN (gradient index) lens (12) .

2. Device according to claim 1, **characterised in that** the multi-coloured light beam (4) produced by means of the light source (3) is a polychromatic light beam, preferably white light, and/or
**in that** the light beam (4) is directed from the light source (3) through one or more beam waveguide(s) (6) to the optical imaging system (7).

3. Device according to claim 1 or 2, **characterised in that** the optical imaging system (7) has a lens system.

4. Device according to any one of claims 1 to 3,
**characterised in that** the GRIN lens (12) can be adapted by means of a positioning device (14) in terms of the chromatic aberration thereof, and/or **in that**
there is arranged downstream of the GRIN lens (12) an additional optical system (13), by means of which during measurements a larger spacing between the GRIN lens (12) and the surface (9) to be measured can be achieved and/or a coupling of the light beams emitted from the GRIN lens (12) into a beam waveguide is possible.

5. Device according to any one of claims 1 to 4,
**characterised in that** the redirection device (8) is constructed to be movable, wherein
the redirection device (8) may be movable by means of electrical, piezoelectric, magnetic or comparable positioning devices, and wherein
the redirection device (8) may have a prism, a plane-parallel plate, a mirror or other devices which influence the propagation direction of light beams.

6. Device according to any one of claims 1 to 5,
**characterised in that** the light beam (4) produced by the light source (3) and the light beam (10) reflected on the surface (9) are separated by means of an optical switch (4).

7. Device according to any one of claims 1 to 6,
**characterised in that** the sensor device (11) comprises a photodetector array, preferably a linear array.

8. Device according to any one of claims 1 to 7,
**characterised in that** the device is constructed as a multi-channel system, whereby a plurality of measurements can be carried out at the same time.

9. Device according to any one of claims 1 to 8,
**characterised in that** the light beam discharged from the optical imaging system (7) can be divided over a plurality of measurement locations and the reflection of the measurement locations can be directed via a plurality of beam waveguides (6) to the sensor device (11).

10. Device according to any one of claims 1 to 9,
**characterised in that** the signals produced by the sensor device (11) are supplied to an electronic device, preferably a digital processor in the form of a microcontroller or a digital signal processor, for signal processing.

11. Method for examining surfaces inside holes or recesses for operating a device according to any one of claims 1 to 10, wherein the device (1) has a light source (3) for producing a light beam (4), wherein the light beam (4) can be focused by means of an optical imaging system (7), wherein the focused light beam can be directed by means of a redirection device (8) which is arranged downstream of the optical imaging system (7) onto the surface (9), and wherein in order to detect the reflected light beam (10) a sensor device (11) is provided, wherein
there is produced by means of the light source (3) a multi-coloured light beam (4) which is focused by means of chromatic aberration of a GRIN (gradient index) lens (12) of the optical imaging system (7) onto a plurality of locations which are spaced apart by different distances from the optical imaging system, and wherein the spacing with respect to the surface is established from the spectrum of the detected light beam (10).

12. Method according to claim 11, **characterised in that** the light beam (4) is guided by the redirection device (8) in a linear, circular, helical, meandering or other appropriate manner over the surface (9) and consequently the surface (9) is scanned.

## Claims (Claims for the following Contracting State(s): DE)

1. Device for examining surfaces inside holes or recesses, wherein the device (1) has a light source (3) for producing a light beam (4), wherein the light beam (4) can be focused by means of an optical imaging system (7), wherein the focused light beam can be directed by means of a redirection device (8) which is arranged downstream of the optical imaging system (7) onto the surface (9), and wherein in order to detect the light beam (10) reflected by the surface (9) a sensor device (11) is provided, wherein
there can be produced by means of the light source (3) a multi-coloured light beam (4), which is focused by means of chromatic aberration of the optical imaging system (7) onto a plurality of locations which are spaced apart by different distances from the optical imaging system (7), wherein the spacing with respect to the surface can be established from the spectrum of the detected light beam (10), wherein the optical imaging system (7) has a GRIN (gradient index) lens (12), and wherein the GRIN lens (12) can be adapted by means of a positioning device (14) in terms of the chromatic aberration thereof.

2. Device according to claim 1, **characterised in that** the multi-coloured light beam (4) produced by means of the light source (3) is a polychromatic light beam, preferably white light, and/or
**in that** the light beam (4) is directed from the light source (3) through one or more beam waveguide(s) (6) to the optical imaging system (7).

3. Device according to claim 1 or 2, **characterised in that** the optical imaging system (7) has a lens system.

4. Device according to any one of claims 1 to 3,
**characterised in that** there is arranged downstream of the GRIN lens (12) an additional optical system (13), by means of which during measurements a larger spacing between the GRIN lens (12) and the surface (9) to be measured can be achieved and/or a coupling of the light beams emitted from the GRIN lens (12) into a beam waveguide is possible.

5. Device according to any one of claims 1 to 4,
**characterised in that** the redirection device (8) is constructed to be movable, wherein
the redirection device (8) may be movable by means of electrical, piezoelectric, magnetic or comparable positioning devices, and wherein
the redirection device (8) may have a prism, a plane-parallel plate, a mirror or other devices which influence the propagation direction of light beams.

6. Device according to any one of claims 1 to 5,
**characterised in that** the light beam (4) produced by the light source (3) and the light beam (10) reflected on the surface (9) are separated by means of an optical switch (4).

7. Device according to any one of claims 1 to 6,
**characterised in that** the sensor device (11) comprises a photodetector array, preferably a linear array.

8. Device according to any one of claims 1 to 7,
**characterised in that** the device is constructed as a multi-channel system, whereby a plurality of measurements can be carried out at the same time.

9. Device according to any one of claims 1 to 8,
**characterised in that** the light beam discharged from the optical imaging system (7) can be divided over a plurality of measurement locations and the reflection of the measurement locations can be directed via a plurality of beam waveguides (6) to the sensor device (11).

10. Device according to any one of claims 1 to 9,
**characterised in that** the signals produced by the sensor device (11) are supplied to an electronic device, preferably a digital processor in the form of a microcontroller or a digital signal processor, for signal processing.

11. Method for examining surfaces inside holes or recesses for operating a device according to any one of claims 1 to 10, wherein the device (1) has a light source (3) for producing a light beam (4), wherein the light beam (4) can be focused by means of an optical imaging system (7), wherein the focused light beam can be directed by means of a redirection device (8) which is arranged downstream of the optical imaging system (7) onto the surface (9), and wherein in order to detect the reflected light beam (10) a sensor device (11) is provided, wherein
there is produced by means of the light source (3) a multi-coloured light beam (4) which is focused by means of chromatic aberration of a GRIN (gradient index) lens (12) of the optical imaging system (7) onto a plurality of locations which are spaced apart by different distances from the optical imaging system, wherein a positioning device for adapting the chromatic aberration is associated with the GRIN lens (12), and wherein the spacing with respect to the surface is established from the spectrum of the detected light beam (10).

12. Method according to claim 11, **characterised in that** the light beam (4) is guided by the redirection device (8) in a linear, circular, helical, meandering or other appropriate manner over the surface (9) and consequently the surface (9) is scanned.

## Revendications (Revendications pour l'(les) Etat(s) contractant(s) suivant(s): FR, GB, IT)

1. Dispositif de contrôle de surfaces à l'intérieur de trous ou de cavités, le dispositif (1) comprenant une source de lumière (3) pour la production d'un faisceau lumineux (4), le faisceau lumineux (4) pouvant être focalisé par une optique de reproduction (7), le faisceau lumineux focalisé pouvant être orienté vers la surface (9) au moyen d'un dispositif de déviation (8) disposé après l'optique de reproduction (7) et, pour la détection du faisceau lumineux (10) réfléchi par la surface (9), un dispositif à capteur (11) étant prévu, la source de lumière (3) permettant de générer un faisceau lumineux multicolore (4) qui est focalisé par aberration chromatique de l'optique de reproduction (7) vers plusieurs points à différentes distances de l'optique de reproduction (7), la distance par rapport à la surface pouvant être déterminée à partir du spectre du faisceau lumineux (10) détecté et l'optique de reproduction (7) comprenant une lentille GRIN (gradient index) (12).

2. Dispositif selon la revendication 1, **caractérisé en ce que** le faisceau lumineux multicolore (4) généré par la source de lumière (3) est un faisceau lumineux polychromatique, de préférence de la lumière blanche et/ou
le faisceau lumineux (4) est dirigé par la source de lumière (3) à travers une ou plusieurs fibres optiques (6) vers l'optique de reproduction (7).

3. Dispositif selon la revendication 1 ou 2, **caractérisé en ce que** l'optique de reproduction (7) comprend un système de lentilles.

4. Dispositif selon l'une des revendications 1 à 3, **caractérisé en ce que** la lentille GRIN (12) peut être adaptée par un dispositif de réglage (14), en ce qui concerne son aberration chromatique et/ou
après la lentille GRIN (12) est disposée une autre optique (13) à l'aide de laquelle, lors de mesures, une distance plus grande entre la lentille GRIN (12) et la surface à mesurer (9) peut être obtenue et/ou qui permet une introduction des faisceaux lumineux sortant de la lentille GRIN (12) dans une fibre optique.

5. Dispositif selon l'une des revendications 1 à 4, **caractérisé en ce que** le dispositif de déviation (8) est conçu de façon à être mobile,
le dispositif de déviation (8) pouvant être déplacé par des dispositifs de réglage électriques, piézo-électriques, magnétiques ou similaires et
le dispositif de déviation (8) pouvant comprendre un prisme, une plaque plane parallèle, un miroir ou d'autres dispositifs influençant la direction de propagation des faisceaux lumineux.

6. Dispositif selon l'une des revendications 1 à 5, **caractérisé en ce que** le faisceau lumineux (4) généré par la source de lumière (3) et le faisceau lumineux (10) réfléchi au niveau de la surface (9) sont séparés par un séparateur optique (4).

7. Dispositif selon l'une des revendications 1 à 6, **caractérisé en ce que** le dispositif à capteur (11) comprend une matrice de photodétecteurs, de préférence une matrice linéaire.

8. Dispositif selon l'une des revendications 1 à 7, **caractérisé en ce que** le dispositif est conçu comme un système multi-canaux permettant d'effectuer plusieurs mesures simultanément.

9. Dispositif selon l'une des revendications 1 à 8, **caractérisé en ce que** le faisceau lumineux sortant de l'optique de reproduction (7) peut être réparti sur plusieurs points de mesure et la réflexion des points de mesure peut être orientée sur plusieurs fibres optiques (6) en direction du dispositif à capteur (11).

10. Dispositif selon l'une des revendications 1 à 9, **caractérisé en ce que** les signaux générés par le dispositif à capteur (11) sont entrés dans un dispositif électronique, de préférence un calculateur numérique sous la forme d'un micro-contrôleur ou d'un processeur de signaux numérique, pour le traitement des signaux.

11. Procédé de contrôle de surfaces à l'intérieur de trous ou de cavités, pour l'exploitation d'un dispositif selon l'une des revendications 1 à 10, le dispositif (1) comprenant une source de lumière (3) pour la production d'un faisceau lumineux (4), le faisceau lumineux (4) pouvant être focalisé par une optique de reproduction (7), le faisceau lumineux focalisé pouvant être orienté vers la surface (9) au moyen d'un dispositif de déviation (8) disposé après l'optique de reproduction (7) et, pour la détection du faisceau lumineux (10) réfléchi, un dispositif à capteur (11) étant prévu, la source de lumière (3) permettant de générer un faisceau lumineux multicolore (4) qui est focalisé par aberration chromatique d'une lentille GRIN (12) de l'optique de reproduction (7) vers plusieurs points à différentes distances de l'optique de reproduction (7), la distance par rapport à la surface étant déterminée à partir du spectre du faisceau lumineux (10) détecté.

12. Procédé selon la revendication 11, **caractérisé en ce que** le faisceau lumineux (4) est guidé par le dispositif de déviation (8) de manière linéaire, circulaire, en spirale, en zigzag ou d'une autre manière sur la surface (9) et la surface (9) est ainsi balayée.

## Revendications (Revendications pour l'(les) Etat(s) contractant(s) suivant(s): DE)

1. Dispositif de contrôle de surfaces à l'intérieur de trous ou de cavités, le dispositif (1) comprenant une source de lumière (3) pour la production d'un faisceau lumineux (4), le faisceau lumineux (4) pouvant être focalisé par une optique de reproduction (7), le faisceau lumineux focalisé pouvant être orienté vers la surface (9) au moyen d'un dispositif de déviation (8) disposé après l'optique de reproduction (7) et, pour la détection du faisceau lumineux (10) réfléchi par la surface (9), un dispositif à capteur (11) étant prévu, la source de lumière (3) permettant de générer un faisceau lumineux multicolore (4) qui est focalisé par aberration chromatique de l'optique de reproduction (7) vers plusieurs points à différentes distances de l'optique de reproduction (7), la distance par rapport à la surface pouvant être déterminée à partir du spectre du faisceau lumineux (10) détecté, l'optique de reproduction (7) comprenant une lentille GRIN (gradient index) (12), et la lentille GRIN (12) pouvant être adaptée par un dispositif de réglage (14), en ce qui concerne son aberration chromatique.

2. Dispositif selon la revendication 1, **caractérisé en ce que** le faisceau lumineux multicolore (4) généré par la source de lumière (3) est un faisceau lumineux polychromatique, de préférence de la lumière blanche et/ou
le faisceau lumineux (4) est dirigé par la source de lumière (3) à travers une ou plusieurs fibres optiques (6) vers l'optique de reproduction (7).

3. Dispositif selon la revendication 1 ou 2, **caractérisé en ce que** l'optique de reproduction (7) comprend un système de lentilles.

4. Dispositif selon l'une des revendications 1 à 3, **caractérisé en ce que**, après la lentille GRIN (12) est disposée une autre optique (13) à l'aide de laquelle, lors de mesures, une distance plus grande entre la lentille GRIN (12) et la surface à mesurer (9) peut être obtenue et/ou qui permet une introduction des faisceaux lumineux sortant de la lentille GRIN (12) dans une fibre optique.

5. Dispositif selon l'une des revendications 1 à 4, **caractérisé en ce que** le dispositif de déviation (8) est conçu de façon à être mobile,
le dispositif de déviation (8) pouvant être déplacé par des dispositifs de réglage électriques, piézo-électriques, magnétiques ou similaires et
le dispositif de déviation (8) pouvant comprendre un prisme, une plaque plane parallèle, un miroir ou d'autres dispositifs influençant la direction de propagation des faisceaux lumineux.

6. Dispositif selon l'une des revendications 1 à 5, **caractérisé en ce que** le faisceau lumineux (4) généré par la source de lumière (3) et le faisceau lumineux (10) réfléchi au niveau de la surface (9) sont séparés par un séparateur optique (4).

7. Dispositif selon l'une des revendications 1 à 6, **caractérisé en ce que** le dispositif à capteur (11) comprend une matrice de photodétecteurs, de préférence une matrice linéaire.

8. Dispositif selon l'une des revendications 1 à 7, **caractérisé en ce que** le dispositif est conçu comme un système multi-canaux permettant d'effectuer plusieurs mesures simultanément.

9. Dispositif selon l'une des revendications 1 à 8, **caractérisé en ce que** le faisceau lumineux sortant de l'optique de reproduction (7) peut être réparti sur plusieurs points de mesure et la réflexion des points de mesure peut être orientée sur plusieurs fibres optiques (6) en direction du dispositif à capteur (11).

10. Dispositif selon l'une des revendications 1 à 9, **caractérisé en ce que** les signaux générés par le dispositif à capteur (11) sont entrés dans un dispositif électronique, de préférence un calculateur numérique sous la forme d'un micro-contrôleur ou d'un processeur de signaux numérique, pour le traitement des signaux.

11. Procédé de contrôle de surfaces à l'intérieur de trous ou de cavités, pour l'exploitation d'un dispositif selon l'une des revendications 1 à 10, le dispositif (1) comprenant une source de lumière (3) pour la production d'un faisceau lumineux (4), le faisceau lumineux (4) pouvant être focalisé par une optique de reproduction (7), le faisceau lumineux focalisé pouvant être orienté vers la surface (9) au moyen d'un dispositif de déviation (8) disposé après l'optique de reproduction (7) et, pour la détection du faisceau lumineux (10) réfléchi, un dispositif à capteur (11) étant prévu, la source de lumière (3) permettant de générer un faisceau lumineux multicolore (4) qui est focalisé par aberration chromatique d'une lentille GRIN (12) de l'optique de reproduction (7) vers plusieurs points à différentes distances de l'optique de reproduction (7), un dispositif de réglage étant adjoint à la lentille GRIN (12) pour l'adaptation en ce qui concerne son aberration chromatique, et la distance par rapport à la surface étant déterminée à partir du spectre du faisceau lumineux (10) détecté.

12. Procédé selon la revendication 11, **caractérisé en ce que** le faisceau lumineux (4) est guidé par le dispositif de déviation (8) de manière linéaire, circulaire, en spirale, en zigzag ou d'une autre manière sur la surface (9) et la surface (9) est ainsi balayée.
